# EUROPEAN PATENT APPLICATION

(11) **EP 1 607 647 A1**
(43) Date of publication of application: **21.12.2005**
(21) Application number: 05011374.5
(22) Date of filing: 25.05.2005
(51) Int. Cl.: F16D 3/38, F16D 1/08

(54) **Universal joint**

(30) Priority: 17.06.2004 JP 2004179426; 25.06.2004 JP 2004188282
(71) Applicant: NSK Ltd., Shinagawa-ku, Tokyo (JP); NSK Steering Systems Co., Ltd., Shinagawa-ku, Tokyo (JP)
(72) Inventor: Sadakata, Kiyoshi, Maebashi-shi Gunma (JP); Aida, Akira, Maebashi-shi Gunma (JP); Sekine, Hiroshi, Maebashi-shi Gunma (JP); Komori, Hiromichi, Maebashi-shi Gunma (JP)
(74) Representative: Grünecker, Kinkeldey, Stockmair & Schwanhäusser Anwaltssozietät

(57) **Abstract**

A universal joint has a shaft including a pair of outer side planes at its front end a yoke connecting the pair of outer side planes of the shaft, the yoke including a base end portion having an opening portion and a pair of restraining plate portions having restraining faces opposing to the respective outer side planes and a through hole or a screw hole and a connecting portion connecting the pair of restraining plate portions and a restraining bolt screwing a male screw portion formed at a front end portion of the base end portion to fasten the outer side planes of the shaft, wherein the yoke is made of a material having a tensile strength 310 N/mm² or more, or wherein the yoke is made of a material having a nominal plate thickness between 6.15mm and 7.85mm.

## Description

The present invention claims foreign priority to Japanese patent application no. P.2004-188282, filed on June 25, 2004 and no. P.2004-179426, filed on june 17, 2004 the contents of which are incorporated herein by reference.

### BACKGROUND OF THE INVENTION

### 1. Field of the Invention

The present invention relates to a universal joint, particularly relates to a universal joint used for a connecting portion of a steering shaft in a steering apparatus connected, to which a large steering torque is applied.

### 2. Description of the Related Art

In a steering apparatus for steering a front wheel of a vehicle, movement of a steering shaft rotated by operating a steering wheel is transmitted to an input shaft of a steering gear via a universal joint. According to the universal joint, by coupling a pair of yokes via a cross shaft, even when centers of the yokes are not aligned each other, a rotational force can be transmitted between the two yokes.

When a steering force assisting apparatus of an electric power steering apparatus or the like is attached to the steering apparatus, a large steering torque is applied to the universal joint disposed between the steering force assisting apparatus and the input shaft of the steering gear. Further, even in a manual steering apparatus which is not attached with a steering force assisting apparatus, steering of a steering wheel when the vehicle stops, a large steering torque is applied to a universal joint.

In the universal joint of a transverse inserting type as mentioned above, a hot-rolled mild steel plate (SPHC, SPHD, SPHE) having an excellent elongation property and small hardness is used as a material of a yoke. In this case, plate thickness of the material is 5.7mm through 6.0mm. This yoke is used at a location on a side of a steering wheel of a steering force assisting apparatus having a small steering torque (see Japanese Patent Unexamined Publications JP-A-9-291910, JP-A-10-2339 and JP-A-10-9281).

Therefore, when the aforementioned universal joint of the transverse inserting type is used between the steering force assisting apparatus and the input shaft of the steering gear, a large steering torque is applied to the universal joint, and there is brought about a drawback of giving a strange feeling to a driver operating the steering wheel and loosening a portion of coupling the yoke and a shaft owing to deformation or wear by a deficiency in a strength of the yoke.

### SUMMARY OF THE INVENTION

One of objects of the present invention is to solve the above-described problem and to provide a universal joint preferable for being used at a location applied with a large steering torque, having a large strength of a yoke, resolving loosening of a portion of coupling the yoke and a shaft, facilitating to work and capable of being fabricated at low cost.

The above-described problem is resolved by the following means.

According to aspect 1 of the present invention, there is provided a universal joint comprising:
a shaft provided with a pair of outer side planes at a front end thereof;
a yoke being capable of connecting the pair of outer side planes of the shaft, the yoke including:
   a base end portion having:
      an opening portion at side of the base end portion, to which the outer side planes of the shaft is inserted;
      a pair of restraining plate portions provided thereon separately from each other, the restraining plate portions having:
         restraining faces which opposes to the respective outer side planes at respective inner side faces thereof; and
         a through hole or a screw hole which are substantially concentric with each other; and
      a connecting portion connecting the pair of restraining plate portions at a position opposite side of the opening portion; and
a restraining bolt screwing a male screw portion formed at a front end portion thereof to the screw hole or a nut in a state of being inserted through the through hole to thereby fasten the outer side planes of the shaft by the restraining faces of the restraining plate portions,
wherein the yoke is made of a material having a tensile strength equal to or larger than 310 N/mm².

According to aspect 2 of the present invention, there is provided a universal joint comprising:
a shaft provided with a pair of outer side planes at a front end thereof;
a yoke being capable of connecting the pair of outer side planes of the shaft, the yoke including:
   a base end portion having:
      an opening portion at side of the base end portion, to which the outer side planes of the shaft is inserted;
      a pair of restraining plate portions provided thereon separately from each other, the restraining plate portions having:
         restraining faces which opposes to the respective outer side planes at respective inner side faces thereof; and
         a through hole or a screw hole which are substantially concentric with each other; and
      a connecting portion connecting the pair of restraining plate portions at a position opposite side of the opening portion; and
a restraining bolt screwing a male screw portion formed at a front end portion thereof to the screw hole or a nut in a state of being inserted through the through hole to thereby fasten the outer side planes of the shaft by the restraining faces of the restraining plate portions,
wherein the yoke is made of a material having a nominal plate thickness equal to or larger than 6.15mm and equal to or smaller than 7.85mm .

According to aspect 3 as set forth in the aspect 1 of the present invention, it is preferable that the yoke is made of a material having a thickness equal to or larger than 6.15mm and equal to or smaller than 7.85mm.

According to aspect 4 as set forth in the aspect 1 of the present invention, it is preferable that a nominal diameter of the restraining bolt is equal to or larger than M10,
a strength classification thereof is equal to or larger than 8.8 and
a fastening torque of the restraining bolt is equal to or larger than 32.7N·m.

According to aspect 5 as set forth in the aspect 1 of the present invention, it is preferable that a steering force assisting apparatus is attached between the yoke and a steering wheel.

According to aspect 6 as set forth in the aspect 1 of the present invention, it is preferable that a center of a contact face in which the outer side plane contacts with the restraining face is shifted from a center of the shaft to an opposite side of the through hole or screw hole, to thereby enlarge a distance defined between an edge of the contact face on a side of the through hole or the screw hole and the through hole or the screw hole.

According to aspect 7 as set forth in the aspect 1 of the present invention, it is preferable that a concavoconvex portion is formed in an axial direction on at least one of a slide face of the shaft and a slide face of the yoke, both of which shift each other in the axial direction when a force sliding the shaft and the yoke in an axial direction thereof is applied thereto, to thereby engaging the shaft and the yoke in order to prevent from being displaced in the axial direction.

According to aspect 8 as set forth in the aspect 1 of the present invention, it is preferable that a thin film made of a material having a large friction coefficient is interposed between contact faces of the shaft and the yoke, on which the shaft and the yoke contact with each other.

According to aspect 9 as set forth in the aspect 1 of the present invention, it is preferable that the pairs of restraining plate portions are not parallel with the outer side planes in a state before fastening the restraining bolt in accordance with a degree of strongly undergoing an influence of a fastening force of the restraining bolt, to thereby increase shaft holding force between the respective restraining faces and the outer side planes in accordance with fastening the restraining bolt.

According to aspect 10 as set forth in the aspect 1 of the present invention, it is preferable that the a second through hole or a thin-walled portion is formed at a part of the yoke, to thereby decrease rigidity of the yoke functioning between the pair of the restraining plate portions against a force generated based on fastening of the restraining bolt in order to enhance an efficiency of fastening the pair of outer side planes and the respective restraining faces in fastening the restraining bolt.

According to aspect 11 as set forth in the aspect 1 of the present invention, it is preferable that an interval between the restraining faces of the pair of restraining plate portions before fastening the restraining bolt is formed to be narrow on a side of being proximate to the connecting portion and to be wide on the opening side of the base end portion formed with the through hole or the screw hole, respectively, to thereby make the pair of the outer side plane and the respective restraining face begin to contact each other at proximate to the connecting portion and also make a position in which a maximum contacting pressure applies shift to the opening of the end base portion or the maximum contacting pressure increase with a progress of an operation of fastening the restraining bolt.

According to aspect 12 as set forth in the aspect 2 of the present invention, it is preferable that the yoke is made of a material having a tensile strength equal to or larger than 310 N/mm².

According to aspect 13 as set forth in the aspect 2 of the present invention, it is preferable that a nominal diameter of the restraining bolt is equal to or larger than M10,
a strength classification thereof is equal to or larger than 8.8 and
a fastening torque of the restraining bolt is equal to or larger than 32.7N·m.

According to aspect 14 as set forth in the aspect 2 of the present invention, it is preferable that a steering force assisting apparatus is attached between the yoke and a steering wheel.

According to aspect 15 as set forth in the aspect 2 of the present invention, it is preferable that a center of a contact face in which the outer side plane contacts with the restraining face is shifted from a center of the shaft to an opposite side of the through hole or screw hole, to thereby enlarge a distance defined between an edge of the contact face on a side of the through hole or the screw hole and the through hole or the screw hole.

According to aspect 16 as set forth in the aspect 2 of the present invention, it is preferable that a concavoconvex portion is formed in an axial direction on at least one of a slide face of the shaft and a slide face of the yoke, both of which shift each other in the axial direction when a force sliding the shaft and the yoke in an axial direction thereof is applied thereto, to thereby engaging the shaft and the yoke in order to prevent from being displaced in the axial direction.

According to aspect 17 as set forth in the aspect 2 of the present invention, it is preferable that a thin film made of a material having a large friction coefficient is interposed between contact faces of the shaft and the yoke, on which the shaft and the yoke contact with each other.

According to aspect 18 as set forth in the aspect 2 of the present invention, it is preferable that the pairs of restraining plate portions are not parallel with the outer side planes in a state before fastening the restraining bolt in accordance with a degree of strongly undergoing an influence of a fastening force of the restraining bolt, to thereby increase shaft holding force between the respective restraining faces and the outer side planes in accordance with fastening the restraining bolt.

According to aspect 19 as set forth in the aspect 2 of the present invention, it is preferable that the a second through hole or a thin-walled portion is formed at a part of the yoke, to thereby decrease rigidity of the yoke functioning between the pair of the restraining plate portions against a force generated based on fastening of the restraining bolt in order to enhance an efficiency of fastening the pair of outer side planes and the respective restraining faces in fastening the restraining bolt.

According to aspect 20 as set forth in the aspect 2 of the present invention, it is preferable that an interval between the restraining faces of the pair of restraining plate portions before fastening the restraining bolt is formed to be narrow on a side of being proximate to the connecting portion and to be wide on the opening side of the base end portion formed with the through hole or the screw hole, respectively, to thereby make the pair of the outer side plane and the respective restraining face begin to contact each other at proximate to the connecting portion and also make a position in which a maximum contacting pressure applies shift to the opening of the end base portion or the maximum contacting pressure increase with a progress of an operation of fastening the restraining bolt.

According to the universal joint of the present invention, there is used the hot-rolled steel plate for automobile structure having the large hardness and the large tensile strength. Also, since the material having large plate thickness is used as the yoke, the plate thickness of the yoke is increased. Therefore, loosening of the portion of coupling the yoke and the shaft accompanied by plastic deformation or the like is resolved. Accordingly, the universal joint is preferable for being used at a location applied with a large steering torque. Further, since the universal joint is constituted by the yoke of a transverse inserting type having a simple shape, the yoke is facilitated to work and mass production thereof by pressing can be carried out. Accordingly, the yoke can be fabricated at low cost.

### BRIEF DESCRIPTION OF THE DRAWINGS

Fig.1 is a front view of a total of a steering column apparatus mounted with a universal joint of an embodiment of the present invention;
Fig.2 is a side view showing a state of coupling a base end portion of a yoke of the universal joint according to the embodiment of the present invention to an end portion of a shaft;
Fig.3 is a partial sectional view showing a first example of the embodiment of the present invention and is a sectional view taken along a line A-A of Fig.2;
Fig.4 is a perspective view of an end portion of a shaft used in the first example;
Fig.5 is a perspective view of an end portion of a shaft showing a second example of the embodiment of the present invention;
Fig.6 is a partial sectional view showing a third example of the embodiment of the present invention and is a sectional view taken along a line A-A of Fig.2;
Fig.7 illustrates a side view and a plane view of a restraining bolt showing a fourth example of the embodiment of the present invention;
Fig.8 is a partial perspective view of a shaft showing a fifth example of the embodiment of the present invention;
Fig.9 is a partial perspective view of a yoke showing a sixth example of the embodiment of the present invention;
Fig.10 is a perspective view of an end portion of a shaft showing a seventh example of the embodiment of the present invention;
Fig.11 is a perspective view of an end portion of a shaft showing an eighth example of the embodiment of the present invention;
Fig. 12 is a partial side view of a universal joint showing a ninth example of the embodiment of the present invention;
Fig.13 is a right side view of Fig.12;
Fig.14 is a partial sectional view showing a tenth example of the embodiment of the present invention and is a sectional view taken along a line A-A of Fig.2;
Fig.15 is a sectional view of a half of a shaft showing an eleventh example of the embodiment of the present invention;
Fig.16 is a partial side view of a universal joint showing a twelfth example of the embodiment of the present invention;
Fig.17 is a right side view of Fig.16;
Fig.18 is a side view of a yoke showing a thirtieth example of the embodiment of the present invention;
Fig.19 is a view similar to Fig.17 showing a fourteenth example of the embodiment of the present invention;
Fig.20 is a view similar to Fig. 16 showing a fifteenth example of the embodiment of the present invention;
Fig.21 is a sectional view showing a base end portion of a yoke and an end portion of a shaft of the embodiment of the present invention in a state before fastening a fastening bolt, a right half constituting a boundary by a center line shows a sixteenth example of the embodiment of the present invention; and a left half constituting the boundary by the center line shows a seventeenth example of the embodiment of the present invention;
Fig.22 is a view enlarging portion A of Fig.21, showing the sixteenth example of the embodiment of the present invention;
Fig.23 illustrates a side view and a plane view of a restraining bolt used in fastening a yoke of the sixteenth example;
Fig.24 is a perspective view showing a constitution of a total of a yoke constituting a seventeenth example of the embodiment of the present invention; and
Fig.25 is a perspective view showing a constitution of a total of a yoke according to a modified example of the seventeenth example of the embodiment of the present invention.

### DETAILED DESCRIPTION OF THE PREFERRED EMBODIMENTS

In the following descriptions, nominal plate thickness is defined in JIS (Japanese Industrial Standards). In the JIS, it is permitted to add a tolerance of ±0.35mm to the numerical values

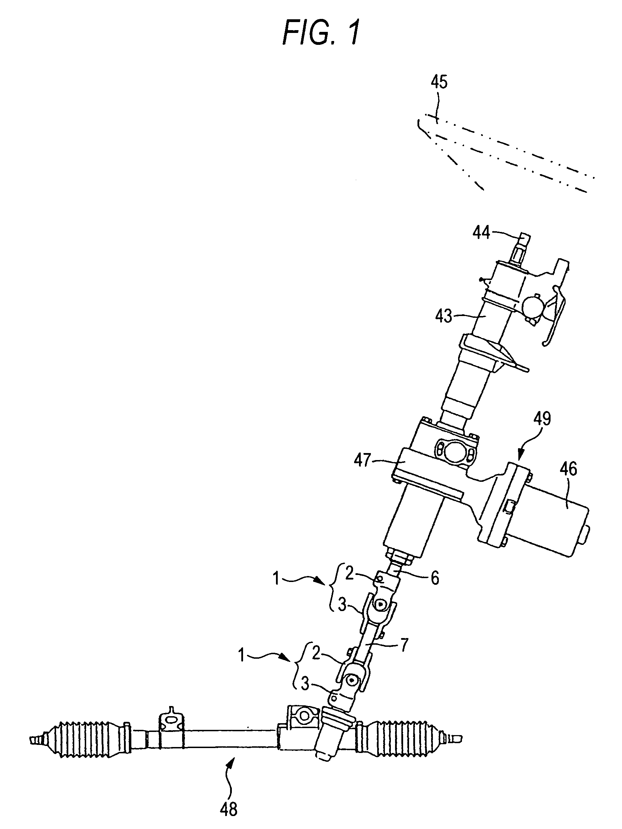

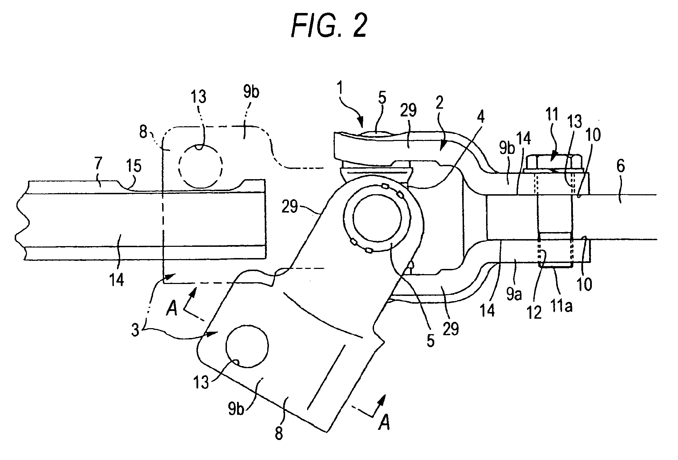

An embodiment of the present invention will be explained in reference to the drawings as follows. Fig.1 is a front view of a total of a steering column apparatus mounted with a universal joint according to an embodiment of the present invention. Fig.2 is a side view showing a state of coupling a base end portion of a yoke according to the embodiment of the present invention to an end portion of a shaft.

Fig.1 shows an example of mounting a universal joint according to the embodiment of the present invention to a column type electric power steering apparatus. In a column 43 fixed to a vehicle body, a steering shaft 44 attached with a steering wheel 45 is pivotably supported by a rear side of the vehicle body (upper side of Fig.1). A lower side of the column 43 is attached with a reduction gear box 47 of an electric type steering force assisting apparatus 49.

The steering force assisting apparatus 49 detects a steering torque of the steering wheel 45, rotates a motor 46 for generating an assisting steering force in proportion to the detected steering torque and transmits rotation of the motor 46 to a shaft (output shaft) 6 by reducing a speed thereof by the reduction gear box 47. The steering force transmitted to the shaft 6 is transmitted to a shaft (middle shaft) 7 via a universal joint 1 on an upper side and is transmitted from the shaft 7 to a pinion shaft (not illustrated) of a rack/pinion movement converting mechanism 48 via a universal joint 1 on a lower side.

As shown in Fig.2 in details, the universal joint 1 according to the embodiment of the present invention couples a pair of yokes 2, 3 via a cross shaft 4. End portions at four locations provided at the cross shaft 4 are pivotably supported respectively by front end portions of the respective yokes 2, 3 via needle bearings provided in bearing cups 5, 5. Therefore, even when centers of the two yokes 2, 3 are not aligned each other, a rotational force is transmitted between the two yokes 2, 3.

When the steering apparatus is integrated by using the universal joint 1, for example, the yoke 2 on one side (right side of Fig.2) is previously coupled to fix to an end portion of the shaft 6 on one side by screwing. The yoke 3 on other side (left side of Fig.2) is coupled to an end portion of the shaft 7 on other side. In carrying out the integrating operation, normally, after supporting the shaft 6 on one side by the vehicle body, the shaft 6 and the shaft 7 on other side are coupled by the universal joint 1.

The pair of yokes 2, 3 and the shafts 6, 7 constituting the universal joint 1 is of a so-to-speak transverse inserting type by which connecting operation can be carried out without moving the shafts 6, 7 in axial directions. Since the yokes 2, 3 as well as the shafts 6, 7 are provided with the same structures, in the following explanation with regard to detailed structures of the yoke and the shaft, an explanation will be given only of the yoke 3 and the shaft 7 on one side and an explanation of the yoke 2 and the shaft 6 on other side will be omitted.

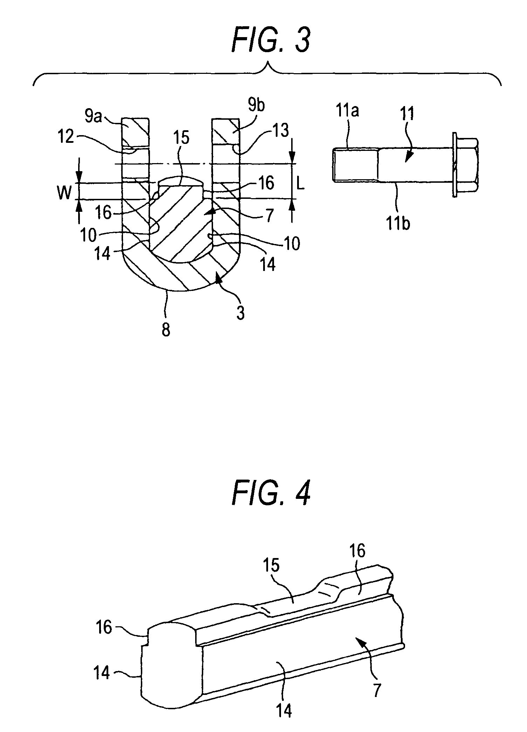

Figs.3 and 4 show detail structures of the yoke 3 and the shaft 7 of a first example of the embodiment of the present invention in correspondence with aspects 1 through 6. Fig.3 is a sectional view taken along a line A-A of a base end portion 8 of the yoke 3 of Fig.2. The base end portion 8 is of a transverse inserting type having a section in a U-like shape. A base end portion 8 of the yoke 3 of the transverse inserting type is constituted by including a pair of restraining plate portions 9a, 9b.

As a material of the yoke 3, in stead of a hot-rolled mild steel plate (SPHC, SPHD, SPHE) as described in the background art, there is adopted a material having a tensile strength equal to or larger than 310N/mm² which is a steel plate having a large hardness and a large tensile strength (for example, hot-rolled steel plate SAPH 310 through SAPH 440 or the like for a structure of an automobile). However, an upper limit of the tensile strength is limited by a restriction of die life and formability in forming and a lower limit thereof is limited in the case of transmitting a large torque since the material is easy to deform since one side of the yoke is constituted by a large open shape owing to the transverse inserting type yoke. Therefore, preferably, the tensile strength is about 400 through 440N/mm².

Further, the restraining plate portions 9a, 9b are made of a material having a plate thickness equal to or larger than 6.5mm and equal to or smaller than 7.5mm, which is larger than 5.7mm through 6.0mm in the background art. In all the embodiments as follows, as a material of the yoke 3, there is used a material having a tensile strength equal to or larger than 310N/mm² or a nominal plate thickness of JIS equal to or larger than 6.5mm and equal to or smaller than 7.5mm (in JIS, it is permitted to add a tolerance of ±0.35mm to the numerical values and therefore, the numerical value range becomes equal to or larger than 6.15mm and equal to or smaller than 7.85mm). Naturally, the tensile strength and the nominal plate thickness may be combined. According to the yoke 3, although the hardness and the tensile strength of the material are large and also the plate thickness is large, owing to the transverse inserting type, the shape is simplified, working is facilitated, mass production by pressing can be carried out and the yoke 3 can be fabricated at low cost.

Respective inner side faces of the restraining plate portions 9a, 9b arranged to be remote from each other are made to constitute restraining faces 10, 10 which are substantially in parallel with each other. Further, a screw hole 12 is provided at an end portion on an opening side of the restraining plate portion 9a on one side (left side of Fig.3). Further, an end portion on an opening side of the restraining plate portion 9b on other side is respectively formed with a through hole 13 substantially concentric with the screw hole 12. The through hole 13 has its diameter larger than that of the screw hole 12. Further, in place of the screw hole 12, a nut may be inwardly fitted to fix to the restraining plate portion 9a. Further, there may be constructed a structure in which a nut is not fitted to fix to the yoke 3.

Meanwhile, a front end portion of the shaft 7 is coupled to the yoke 3 constituted as described above. The front end of the shaft 7 is made of substantially an oval shape as shown in Fig.4 in a sectional view. That is, outer peripheral faces of the front end portion of the shaft 7 are formed with a pair of outer side planes 14, 14 in parallel with each other. When the connecting operation, the shaft 7 is prevented from being rotated relative to the yoke 3 by bringing the outer side planes 14, 14 and the restraining faces 10, 10 into close contact with each other.

When the end portion of the shaft 7 having the above-described shape is connected to fix to the base end portion 8 of the yoke 3 as described above, first, as shown in a bold line in Fig.2, the end portion of the shaft 7 is arranged on the opening side of the base end portion 8. Further, by pivoting the yoke 3 centering on the cross shaft 4 from the state, the yoke 3 is pivoted in the clockwise direction of the drawing from the bold line state to a chain line state of Fig.2, and the end portion of the shaft 7 is inserted into the base end portion 8.

Further, there also is a case where the end portion of the shaft 7 is inserted into the base end portion 8 of the yoke 3 by moving the end portion of the shaft 7 without moving the yoke 3. In either of the cases, before inserting the end portion of the shaft 7 into the base end portion 8, a restraining bolt 11 (Fig.3) is not inserted into the through hole 13.

When the end portion of the shaft 7 is inserted into the base end portion 8 of the yoke 3 as described above so that the respective restraining faces 10, 10 and the outer side planes 14, 14 (Fig.3) are opposed to each other, a male screw portion 11a formed at a front end portion of the restraining bolt 11 inserted into the through hole 13 is screwed to the screw hole 12 to fasten further. Based on the fastening operation, an interval between the pair of restraining faces 10, 10 is narrowed, the respective restraining faces 10, 10 and the respective outer side planes 14, 14 are strongly brought into contact with each other, and the front end portion of the shaft 7 is coupled to fix to the base end portion 8.

Further, according to the restraining bolt 11 of the embodiment of the present invention, a nominal diameter of the male screw portion 11 a is equal to or larger than M10, a strength classification in JIS (which corresponds ISO (International Organization for Standardization) 898-1) is equal to or larger than 8.8 and is fastened by a fastening torque equal to or larger than 32.7N·m. In all the embodiments as follows, the fastening bolt is equal to or larger than M10 in the nominal diameter, equal to or larger than 8.8 in the strength classification and is fastened by the fastening torque equal to or larger than 32.7N·m.

Owing to high tensile strength steel and a large plate thickness, the material is provided with a large hardness and is difficult to deform, the yoke 3 has a serious concern of being deficient in strength of coupling the shaft 7. However, the yoke 3 can solidly be coupled to the shaft 7 by increasing a fastening torque of the restraining bolt 11.

A notch 15 is formed at one end edge portion of an end portion of the shaft 7 to prevent interference between the shaft 7 and a shaft portion outer periphery 11b of the restraining bolt 11. Simultaneously, the notch 15 prevents the yoke 3 from being drawn in an axial direction of the shaft 7 even when the restraining bolt 11 is accidentally loosened.

Summarizing, the notched portion is formed on one end of the shaft in order to avoid interference with the restraining bolt.

Stepped portions 16, 16 are formed at portions of end edges (upper end edges of Figs.3 and 4) of two side edge portions of the outer side planes 14, 14, which is in parallel with each other and formed at the shaft 7, on sides of being proximate to the screw hole 12 and the through hole 13 formed at the restraining plate portions 9a, 9b of the yoke 3. Therefore, portions of the restraining faces 10, 10 of the respective restraining plate portions 9a, 9b opposed to the pair of stepped portions 16, 16 are not brought into contact with the outer side planes 14, 14 constituting counter faces, regardless of fastening of the restraining bolt 11 inserted through the trough hole 13 and screwed to the screw hole 12.

As a result, in both end edge portions of contact faces on which the pairs of outer side planes 14, 14 and the restraining faces 10, 10 contact with each other, distance L defined between one of the edge portions at the screw hole 12 and the through hole 13 side and a center line of the screw hole 12 and the through hole 13 becomes larger by width dimension W (shown in Fig. 3) of the stepped portions 16, 16.

In the case of the portion of coupling the shaft 7 and the yoke 3 of the universal coupling of the example constituted as described above, by increasing the distance L between the end edges of the both end edges of the contact faces for bringing the pairs of outer side planes 14, 14 and restraining faces 10, 10 into contact with each other on the side of the screw hole 12 and the through hole 13 and the center line of the screw hole 12 and the through hole 13, in accordance with fastening the restraining bolt 11, face pressures of the contact portions of the end edges and the restraining faces 10, 10 are increased. As a result, a large frictional force is operated at the contact portion and a holding force of the shaft 7 and the yoke 3 over the axial direction is increased.

Further, the width dimension W of the stepped portions 16, 16 for increasing the distance between the end edge of the contact face and the center line of the screw hole 12 and the through hole 13 as described above is determined in design by sizes of the yoke 3 and the shaft 7.

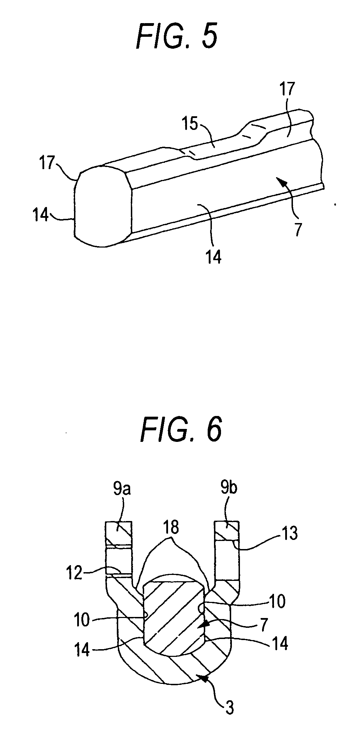

Summarizing, the stepped portion is provided on the outer side plate and is apart from the restraining plate portion.Next, Fig.5 shows a second example of the embodiment of the present invention in correspondence with aspect 6. In the case of the example, inclined faces 17, 17 are formed at end edge portions on one side of the pair of outer side planes 14, 14 which are formed at the shaft 7. Thereby, the distance L between the end edges of the both end edges of the contact faces for bringing the pairs of outer side planes 14, 14 and the restraining faces 10, 10 of the yoke 3 into contact with each other on the side of the screw hole 12 and the through hole 13 (refer to Fig.3) and the center line of the screw hole 12 and the through hole 13 is increased. Other constitution and operation thereof are similar to those of the case of the first example, mentioned above.

Next, Fig.6 shows a third example of the embodiment of the present invention in correspondence with aspect 6. In the case of the example, stepped portions 18, 18 are formed at middle portions of the pair of restraining plates 9a, 9b constituting the yoke 3. Thereby an interval between inner side faces of the respective restraining plate portions 9a, 9b is increased at portions of the respective stepped portions 18, 18 proximate to front ends (proximate to upper ends of Fig.6). Therefore, in the case of the example, portions of the inner side faces of the respective restraining plate portions 9a, 9b more proximate to base ends (proximate to lower ends of Fig.6) than the respective stepped portions 18, 18 function as the restraining faces 10, 10 for restraining the outer side planes 14, 14 formed at the shaft 7.

Also in the case of the example, by pertinently selecting positions of forming the respective stepped portions 18, 18, a shaft holding force can be increased by increasing the distance L (refer to Fig.3) between the end edges of the both end edges of the contact faces for bringing the pairs of outer side planes 14, 14 and the restraining faces 10, 10 of the yoke 3 into contact with each other and the center line of the screw hole 12 and the through hole 13. Other constitution and operation are similar to those of the case of first example, mentioned above.

Summarizing, the stepped portion is formed on the middle of the outer side plate so that the interval between the restraining plate portions is narrower at the connecting portion side than the interval at the restraining bolt side.

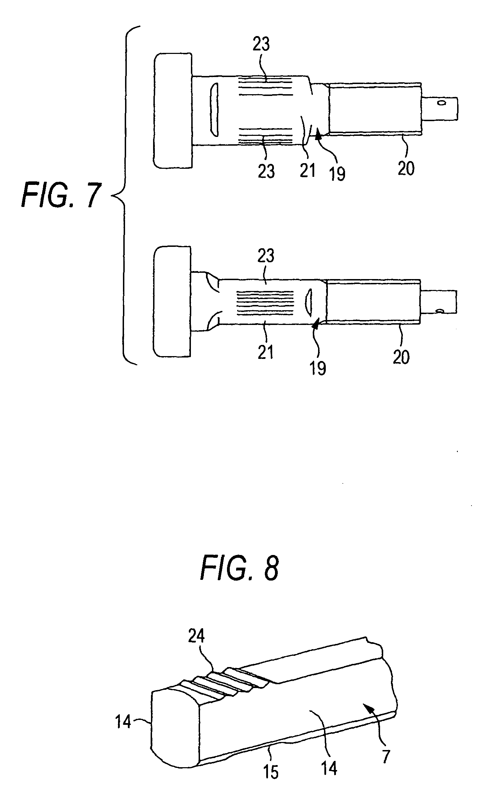

Next, Fig.7 shows a fourth example of the embodiment of the present invention in correspondence with aspect 7, which is a modified example of the restraining bolt. Fig.7 shows a restraining bolt 19 inserted from the through hole 13 formed at the restraining plate portion 9b on one side constituting the yoke 3 to other through hole (provided in place of the screw hole 12 of Fig.3) formed at the restraining plate portion 9a on other side. The restraining bolt 19 is referred to as cam bolt, which is respectively formed with a male screw portion 20 at a front end portion (right end portion of Fig.7) and a cam column portion 21 at a middle portion.

The cam column portion 21 is constituted by an elliptical shape in a sectional shape thereof and is rotatably inserted to inner sides of the through hole 13 and the other through hole. Further, a front end portion of the male screw portion 20 is projected to an outer side of the other restraining portion 9a from the other through hole and is screwed with a nut, not illustrated. Further, as the nut, there is used a calked nut or the like increasing friction between the nut and the male screw portion 20. When the nut is fastened in order to couple the yoke 3 and the shaft 7 (refer to Fig.3), the restraining bolt 19 is rotated on the inner sides of the respective through holes 13 and an outer peripheral face on a long diameter side is pressed to a bottom face portion (refer to Fig.3) of the notch 15 formed at the shaft 7.

In the case of the example, concavoconvex portions 23, 23 are formed at the portion of the outer peripheral face of the cam column portion 21 on the long diameter side, which is pressed to the bottom face portion of the notch 15 in accordance with fastening the nut in this way. When the restraining bolt 19 is rotated in accordance with fastening the nut and the long diameter portion is pressed to the bottom face portion of the notch 15, either of the concavoconvex portion 23 of the concavoconvex portions 23, 23 is engaged with the bottom face portion. Therefore, the holding force between the shaft 7 and the yoke 3 over the axial direction is sufficiently increased by braking force for mechanically engaging the concavoconvex portion 23 with the bottom face portion of the notch 15.

Next, Fig.8 shows a fifth example of the embodiment of the present invention in correspondence with aspect 7. In the case of the example, a concavoconvex portion 24 in a shape of a scrub board, which is a concavoconvex portion over the axial direction of the shaft 7, is formed at a portion of the outer peripheral face of the front end portion of the shaft 7 on a side opposed to the notch 15. When the restraining bolt 11 is fastened in order to couple the shaft 7 and the yoke 3 (refer to Fig.3), the holding force over the axial direction is sufficiently increased by mechanically coupling the concavoconvex portion 24 and the inner face of the yoke 3.

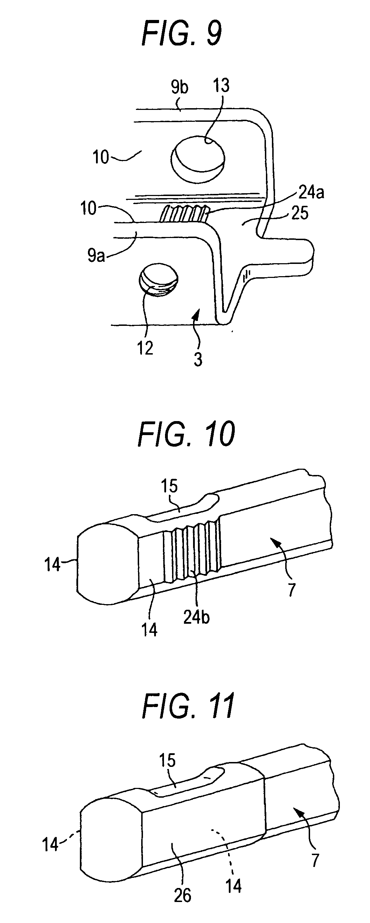

Next, Fig.9 shows a sixth example of the embodiment of the present invention in correspondence with aspect 5. In the case of the example, an inner face of a connecting portion 25 for connecting the pair of restraining plate portions 9a, 9b constituting the yoke 3 is formed with a concavoconvex portion 24a in a shape of a scrub board constituting a concavoconvex portion over the axial direction of the shaft 7 (refer to Fig.3) coupled to the yoke 3. When the restraining bolt 11 is fastened in order to couple the shaft 7 and the yoke 3, the concavoconvex portion 24a and an outer periphery of a portion of the shaft 7 on a side opposed to the notch 15 are mechanically engaged to sufficiently increase the holding force over the axial direction.

Next, Fig.10 shows a seventh example of the embodiment of the present invention in correspondence with aspect 7. In the case of the example, a concavoconvex portion 24b in a shape of a scrub board constituting a concavoconvex portion over the axial direction of the shaft 7 is formed at a portion of at least one (preferably both) of an outer side plane of the pair of outer side planes 14, 14 formed at a front end portion of the shaft 7 and a portion opposed to the screw hole 12 or the through hole 13 (refer to Fig.3) of the pair of restraining plate portions 9a, 9b constituting the yoke 3.

When the restraining bolt 11 is fastened in order to couple the shaft 7 and the yoke 3, the concavoconvex portions 24b and the restraining faces 10, 10 (refer to Fig.3) of the restraining plate portions 9a, 9b are mechanically engaged to sufficiently increase the holding force over the axial direction.

Further, although in the cases of the fifth through the seventh examples shown in Figs.8 through 10, the concavoconvex portions 24, 24a, 24b in the shape of the scrub board are formed at portions of the shaft 7 or the yoke 3. The concavoconvex portion 24, 24a, 24b are preferably formed on the side of the shaft 7. The reason is that since the material constituting the shaft 7 is harder than the material constituting the yoke 3, engagement to the counter face is sufficiently carried out in the case of forming the concavoconvex portion on the side of the shaft 7 in comparison of the case of forming the concavoconvex portion on the side of the yoke 3. Further, it is preferable to form the concavoconvex portion not in a state of recessing a recessed portion than other portion but in a state of projecting a projected portion than other portion.

Summarizing, the shaft has the cam column portion of which sectional view is elliptical shape having the major axis. The outer peripheral face at the major axis side of the cam column portion contacts with the shaft, and at least one of the outer peripheral face of the cam column portion and the contact face of the shaft has a concavoconvex portion.

Next, Fig.11 shows an eighth example of the embodiment of the present invention in correspondence with aspect 8. In the case of the example, rubber layers 26 constituting thin films made of a material having a large friction coefficient are provided at the outer side planes 14, 14 of the front end portion of the shaft 7 brought into contact with the restraining faces 10, 10 (refer to Fig.3) of the yoke 3 when the shaft 7 and the yoke 3 (refer to Fig.3) are coupled.

A thickness dimension of the rubber layer 26 is restricted to a degree by which the rubber layer 26 is provided with a thickness of capable of sufficiently increasing a friction force between the contact faces and also, the rubber layer 26 is not provided with a large thickness for producing a shift in a face direction when the shaft 7 and the yoke 3 are coupled. For that purpose, it is preferable to form a rubber layer having a thickness of about 0.05 through 0.2mm at the front end portion of the shaft 7 by baking.

In the case of the example constituted as described above, by presence of the rubber layer 26 interposed between faces of the shaft 7 and the yoke 3 brought into contact with each other, a large friction force is operated between the outer side planes 14, 14 of the shaft 7 and the restraining faces 10, 10 (Fig.3) of the yoke 3. As a result, the holding force over the axial direction of the shaft 7 and the yoke 3 is increased.

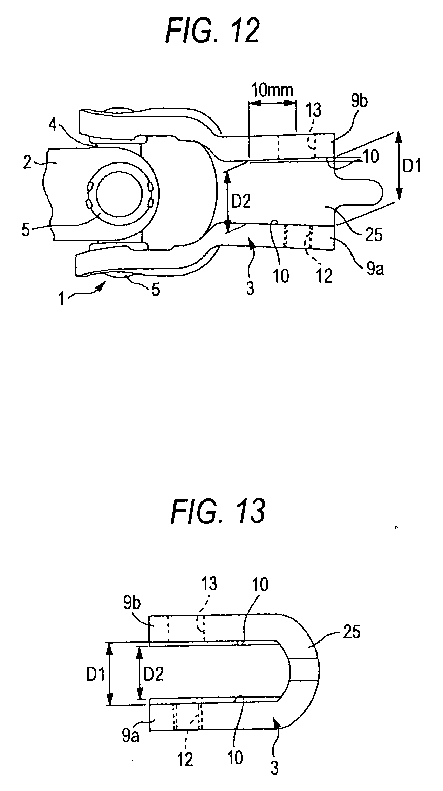

Next, Figs.12 through 13 show a ninth example of the embodiment of the present invention in correspondence with aspect 9. In the case of the example, the pair of restraining plate portions 9a, 9b constituting the yoke 3 is made to be nonparallel with each other before fastening the restraining bolt 11. That is, as shown in Fig.12, in a state of combining the yoke 3 and the cross shaft 4, when the interval between the pair of restraining plate portions 9a, 9b is contracted by the restraining bolt 11, an influence of a fastening force of the restraining bolt 11 is strengthened at the portions of vicinities of the through hole 13 and the screw hole 12 inserted with the restraining bolt 11, and the influence of the fastening force is weakened on a side of being proximate to cross shaft 4.

Therefore, when the pair of restraining plate portions 9a, 9b are made to be in parallel with each other before fastening the restraining bolt 11, contact pressures between the restraining faces 10, 10 of the respective restraining plate portions 9a, 9b and the outer side planes 14, 14 (refer to Fig.3) of the shaft 7 become nonuniform. Particularly, when the respective restraining plate portions 9a, 9b are plastically deformed in accordance with use over a long period of time, a degree of making the contact pressures nonuniform is increased and the holding force over the axial direction of the shaft 7 and the yoke 3 is weakened.

Hence, in the case of the example, the pair of restraining plate portions 9a, 9b are made to be nonparallel with each other in a direction of widening the interval at portions thereof which strongly undergo the influence of the fastening force by the restraining bolt 11. Further, in accordance with fastening the restraining bolt 11, the restraining faces 10, 10 of the respective restraining plate portions 9a, 9b become in parallel with each other to uniformly bring the respective restraining faces 10, 10 and the pair of outer side planes 14, 14 formed at the shaft 7 into contact with each other.

Further, even when the respective restraining plate portions 9a, 9b are plastically deformed owing to using over a long period of time, the degree of making the contact pressures nonuniform is reduced to thereby ensure the holding force over the axial direction of the shaft 7 and the yoke 3.

In the case of the example, further specifically, the interval between the pair of restraining faces 10, 10 are made to be wider on the side of the through hole 13 and the screw hole 12 and narrower on the side of the cross shaft 4. Further, although a difference D1-D2 between an interval D1 (refer to Fig.12) between the restraining faces 10, 10 at end portions thereof on the side of the through hole 13 and the screw hole 12 and an interval D2 (refer to Fig.12) at portions thereof proximate to the side of the cross shaft 4 from the center line of the two holes 13, 12 by 10mm is determined in design in accordance with rigidities of the respective portions. For example, when the difference is set to about 0.08 through 0.23mm, the shaft holding force and plastic deformation resistance can sufficiently be increased by making a state of bringing the respective restraining faces 10, 10 and the outer side planes 14, 14 into contact with each other uniform.

Summarizing, the interval defined between the restraining plate portions becomes narrower towards through hole or screw hole side from an opposite side of the shaft.

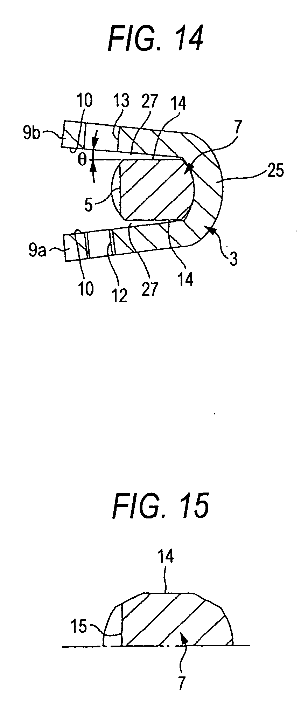

Next, Fig.14 shows a tenth example of the embodiment of the present invention in correspondence with aspect 9. Also in the case of the example, similar to the above-described case of the ninth example, the pair of restraining plate portions 9a, 9b constituting the yoke 3 are made to be nonparallel with each other before fastening the restraining bolt 11.

That is, when the interval between the pair of restraining plate portions 9a, 9b constituting the yoke 3 having a section in a U-like shape as shown in Fig.14 is contracted by the restraining bolt 11, the influence of the fastening force of the restraining bolt 11 is strengthened on the sides of the front ends of the pair of restraining plate portions 9a, 9b and is weakened on the sides of the base ends. Therefore, when the pair of restraining plate portions 9a, 9b are made to be in parallel with each other before fastening the restraining bolt 11, there is increased a rate of fastening on the front end side having a small moment fastening force, which is to exert a maximum moment fastening (maximum shaft holding force) inherently on the base end side.

Hence, also in the case of the example, the pair of restraining plate portions 9a, 9b are made to be nonparallel with each other in the direction of widening the interval at the portion which strongly undergoes the influence of the fastening force by the restraining bolt 11. Further, in accordance with fastening the restraining bolt 11, the restraining faces 10, 10 of the respective restraining plate portions 9a, 9b are made to be in parallel with each other to thereby uniformly bring the respective restraining faces 10, 10 and the pair of outer side planes 14, 14 formed at the shaft 7 into contact with each other.

In the case of the example, further specifically, the interval between the pair of restraining faces 10, 10 is made to be wider on the opening side of the yoke 3 and narrower on the side of the connecting portion 25. Further, in a state in which the shaft 7 is inserted into the yoke 3 and center-lines of sections of the two members 7, 3 are made to coincide with each other, clearances 27, 27 in a wedge-like shape are formed between the restraining faces 10, 10 and the outer side planes 14, 14. Although an angle of inclination θ of the clearances 27, 27 are determined in design in accordance with rigidities of the respective portions. For example, when the angle of inclination is set to about 1 through 2°, the shaft holding force can sufficiently be increased by making the state of bringing the respective restraining faces 10, 10 and the outer side planes 14, 14 uniform.

Summarizing, the interval defined between the restraining plate portions becomes narrower towards the connecting portion side from the opening portion side of the base end portion.

Next, Fig.15 shows an eleventh example of the embodiment of the present invention in correspondence with aspect 9. In the case of the tenth example, mentioned above, by devising the shapes (refer to Fig.14) of the pair of restraining plate portions 9a, 9b constituting the yoke 3, the state of bringing the respective restraining faces 10, 10 and the outer side planes 14, 14 into contact with each other (refer to Fig.14) is made uniform.

In contrast thereto, in the case of the example, by changing the shape of the outer side plane 14 formed at the outer peripheral face of the shaft 7 in accordance with a state of bending the restraining plate portions 9a, 9b accompanied with fastening the restraining bolt 11, the shaft holding force is sufficiently increased by making the state of bringing the respective restraining faces 10, 10 and the outer side planes 14, 14 into contact with each other uniform.

Summarizing, the outer side plane of the shaft has a first inclined face, a flat face and a second inclined face, in this order from the connecting portion side to the opening portion side of the base end portion.

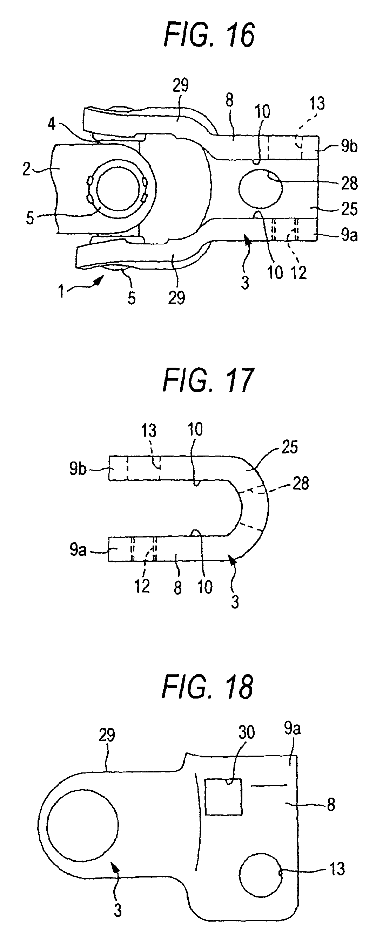

Next, Figs.16 through 17 show a twelfth example of the embodiment of the present invention in correspondence with aspect 10. The pair of restraining plate portions 9a, 9b constituting the base end portion 8 of the yoke 3 are connected to each other by the connecting portion 25 in a shape of a circular arc. Further, a middle portion of the connecting portion 25 is formed with a second through hole 28 in an elliptical shape.

A direction of a long diameter of the second through hole 28 is made to coincide with an axial direction of the shaft 7 (Fig.2) an end portion of which is to be coupled to fix to the base end portion 8. By forming the second through hole 28 at the connecting portion 25, bending rigidity of the connecting portion 25 is reduced.

According to a portion of coupling the yoke 3 and the shaft 7 formed with the second through hole 28 at the connecting portion 25 in this way, the holding force over the axial direction of the shaft 7 and the yoke 3 can be increased. That is, after inserting the end portion of the shaft 7 to the base end portion 8 of the yoke 3, when the restraining bolt 11 inserted through the through hole 13 is screwed to the screw hole 12 to fasten further, the interval between the restraining faces 10, 10 of the pair of restraining plate portions 9a, 9b constituting the base end portion 8 is contracted.

Although presence of the connecting portion 25 constitutes a resistance against a force of making the two restraining faces 10, 10 proximate to each other, the rigidity of the connecting portion 25 is low by the presence of the second through hole 28 and therefore, the resistance by the connecting portion 25 is reduced. Therefore, the pair of outer side planes 14, 14 (Figs.2, 3) provided at the end portion of the shaft 7 and the respective restraining faces 10, 10 are effectively brought into close contact with each other in accordance with fastening the restraining bolt 11.

That is, a fastening torque for fastening the restraining bolt 11 is effectively operated as a torque for strongly bringing the pair of outer side planes 14, 14 and the respective restraining faces 10, 10 into close contact with each other substantially uniformly and the strength of coupling the shaft 7 and the yoke 3 can be ensured.

Next, Fig.18 shows a thirteenth example of the embodiment of the present invention in correspondence with aspect 10. In the case of the example, bending rigidity of the pair of restraining plate portions 9a, 9b is reduced by forming a second through hole 30 at a portion of the yoke 3 between a portion thereof formed with the through hole 13 (or screw hole 12) and portions of a pair of arm portions 29 extended from the base end portion 8 in the axial direction for axially supporting the end portion of the cross shaft 4 (Fig.2) at respective front end portions thereof to reduce the bending rigidity of the pair of restraining plate portions 9a, 9b.

In the case of the yoke 3 as shown in Fig.3, when the yoke 3 is as it is, the rigidities of the restraining plate portions 9a, 9b formed with the through hole 13 (or the screw hole 12) are nonuniform and even when the restraining bolt 11 inserted through the through hole 13 and screwed to the screw hole 12 is fastened, elastic deformation of the pair of restraining plate portions 9a, 9b (Fig.3) formed with the through hole 13 or the screw hole 12 becomes nonuniform.

In contrast thereto, in the case of the example, the second through hole 30 is formed at a portion of increasing the rigidity and therefore, a difference of the rigidities at the respective faces of the pair of restraining plate portions 9a, 9b is reduced. As a result, the pair of outer side planes 14, 14 and the restraining faces 10, 10 (Fig.3) are respectively brought into close contact with each other in accordance with fastening the restraining bolt 11 and the strength of coupling the shaft 7 and the yoke 3 can be ensured.

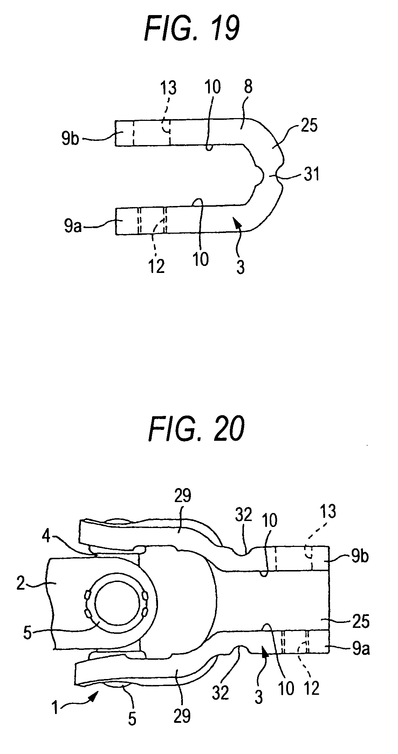

Next, Fig.19 shows a fourteenth example of the embodiment of the present invention in correspondence with aspect 10. In the case of the example, a thin-walled portion 31 is formed at a middle portion of the connecting portion 25 for connecting the pair of restraining plate portions 9a, 9b constituting the base end portion 8 of the yoke 3 over the axial direction of the shaft 7, the end portion of which is to be coupled to fix to the base end portion 8.

By forming the thin-walled portion 31 at the connecting portion 25, the bending rigidity of the connecting portion 25 is reduced. Constitution and operation other than that the thin-walled portion 31 is formed in place of the second through hole 28 (as shown in Figs.16 and 17) for reducing the bending rigidity of the connecting portion 25 in this way are similar to those of the tenth example, mentioned above.

Next, Fig.20 shows a fiftieth example of the embodiment of the present invention in correspondence with aspect 10. In the case of the example, thin-walled portions 32, 32 are formed at portions of the yoke 3 between a portion thereof formed with the through hole 13 (or the screw hole 12) and the arm portions 29, 29 extended from the base end portion 8 in the axial direction for axially supporting the end portions of the cross shaft 4 (Fig.2) at respective front end portions thereof to reduce the bending rigidities of the portions.

Constitution and operation other than that the thin-walled portions 32, 32 are formed in place of the second through hole 30 (Fig.18) for reducing the bending rigidities of the portions are similar to those of the thirteenth example, mentioned above. Further, the twelfth through fifteenth examples of the embodiment, mentioned above, can also be embodied by being combined with each other pertinently. Further, also with regard to the sectional shape of the shaft 7, the sectional shape is not limited to the sectional shape having the pair of outer side planes 14, 14 in parallel with each other but can be embodied also in structures having other sectional shapes of a section of a hexagonal shape, a section of a polygonal shape formed with a serration and the like.

Summarizing, the through hole or the thin-walled portion is formed at the middle of the connecting portion. Alternatively, the through hole or the thin-walled portion is formed between the through hole and the arm portion of which front end supports the cross shaft.

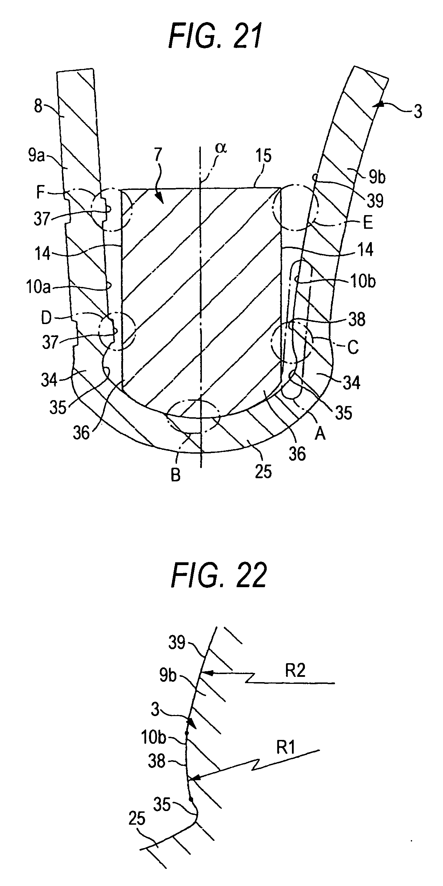

Next, Figs.21 through 25 show a sixteenth example and a seventeenth example of the embodiment of the present invention in correspondence with aspect 11, a right half portion of Fig.21 and Figs.22 and 23 show the sixteenth example of the embodiment of the present invention and a left half portion of Fig.21 and Figs.24 through 25 show the seventeenth example, respectively. The yoke 3 constituting the respective examples are symmetrical in a left and right direction with regard to a center line α except a through hole for inserting a restraining bolt 33.

Edges of base ends (e.g. ends opposed to the opening of the base end portion 8 and lower end of Fig.21) of the pair of restraining plate portions 9a, 9b constituting the base end portion 8 of the yoke 3 are connected to each other by the connecting portion 25 in the shape of the circular arc. Further, thin-walled portions 34, 34 are formed at the portions at which both end edges in a width direction of the connecting plate portion 25 and base end edges of the respective restraining plate portions 9a, 9b are connected to reduce rigidities of the respective continuous portions.

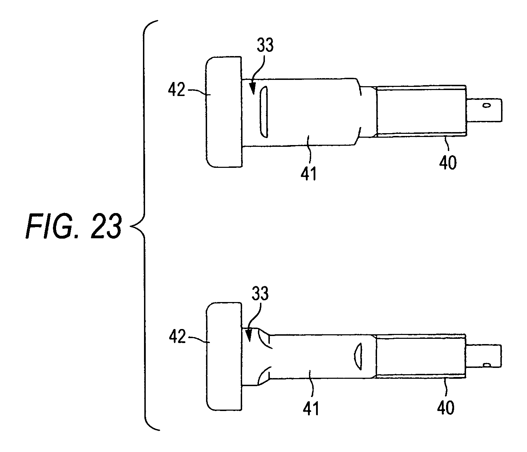

Therefore, when an interval between front end portions (e.g. end portions on an opening side of the base end portion 8 and upper end portions of Fig.21) of the pair of restraining plate portions 9a, 9b is narrowed based on fastening the restraining bolt 33 of Fig.23 and a nut, not illustrated, an interval between restraining faces 10a, 10b of the pair of restraining plate portions 9a, 9b is contracted by a comparatively small fastening force.

Further, in order to form the thin-walled portions 34, 34, in the illustrated example, an inner face of the connecting portion 25 is formed with recess portions 35, 35 over the axial direction (direction orthogonal to paper face of Fig.21) of the shaft 7. The respective recess portions 35, 35 form the respective thin-walled portions 34, 34 and further prevent the inner face of the base end portion 8 and corner portions 36, 36 of the shaft 7 from being interfered with each other in fastening the restraining bolt 33 and the nut.

Further, a shape of a total in a free state of the restraining plate portion 9a on one side (corresponds to left side of Fig.21) of the pair of restraining plate portions 9a, 9b showing the seventeenth example of the embodiment is made to be flat (except projected portions 37, 37, mentioned later). Further, a portion of the restraining face 10a constituting the inner side face of the restraining plate portion 9a on one side opposed to the outer side plane 14 of the shaft 7 is formed with a plurality of projected portions 37, 37 by plastically deforming portions of the restraining plate portion 9a.

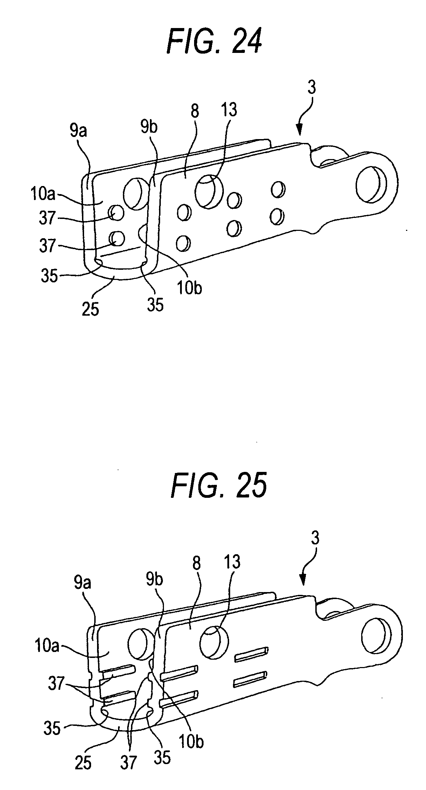

Further, the projected portions 37, 37 may be constituted by projected portions in an embossed shape discontinuous in the axial direction of the shaft 7 (refer to Fig.24 mentioned later) or projected portions in a shape of levee continuous in the axial direction (refer to Fig.25, mentioned later).

In either of the cases, a height (an amount of projecting from the restraining face 10a) of the plurality of projected portions 37, 37 is pertinently adjusted such that a side thereof proximate to the connecting portion 25 is made to be higher in order to be brought into contact with the outer side plane 14 from the side proximate to the connecting portion 25 or the like. Front ends of all the projected portions 37, 37 are butted to the outer side plane 14 in a state of sufficiently fastening the restraining bolt 33. Incidentally, a direction in a free state of the restraining plate portion 9a on one side is inclined in a direction of being remote from the center line α as proceeding to be remote from the connecting plate portion 25.

On contrary, a shape of a total in a free state of the restraining plate portion 9b on other side (corresponds to right side of Fig.21) showing the sixteenth example of the embodiment is formed in a shape of a circular arc in a section thereof constituting a projected face by the restraining face 10b constituting the inner side face of the restraining plate portion 9b. Although the shape of the restraining face 10b may be constituted by a single curved face, in the illustrated example, a shape is constituted by a compound curved face in which cylindrical faces having different radii of curvature are made to be continuous smoothly.

That is, Fig.22 is a view enlarging portion A of Fig.21 and as shown in Fig.22, a portion of the restraining face 10b proximate to the base end is constituted by a first cylindrical curved face 38 having a comparatively small radius of curvature R1 and a portion of from a middle portion of the restraining face 10b to a portion proximate to a front end thereof is constituted by a second cylindrical curved face 39 having a comparatively large radius of curvature R2 (R1<R2).

By constituting the pair of restraining plate portions 9a, 9b by the above-described shapes, in either of cases of the sixteenth example and the seventeenth example, the interval between the restraining faces 10a, 10b of the pair of restraining plate portions 9a, 9b before fastening the restraining bolt 33 is narrowed on the base end side proximate to the connecting portion 25 and widened on the front end side constitution the opening side of the base end portion 8.

Further, through holes (not illustrated) for inserting the restraining bolt 33 are formed at front end side portions of the respective restraining plate portions 9a, 9b to enable to insert the restraining bolt 33 through the respective through holes without being interfered with the shaft 7. However, when the restraining bolt 33 is rotated based on fastening of a nut screwed to a female screw portion 40 provided at a front end portion of the restraining bolt 33 inserted through the two through holes, an outer peripheral face of a cam portion 41 formed at a middle portion of the restraining bolt 33 and having a section in an elliptical shape restrains the shaft 7 to an inner peripheral face of the connecting portion 25.

Further, one through hole of a pair of through holes substantially concentric with each other formed at the pair of restraining plate portions 9a, 9b is constituted by a comparatively large diameter to be able to insert the cam portion 41. The other through hole is constituted by a comparatively small diameter to be able to insert only the male screw portion 40.

According to a portion of coupling the shaft 7 and the yoke 3 of the universal coupling according to the present invention constituted as described above, even when a fastening torque of the restraining bolt 33 is not particularly control strictly, the holding force over the axial direction of the shaft 7 and the base end portion 8 of the yoke 3 can be increased. That is, in order to couple the shaft 7 and the yoke 3, first, in a state of inserting the shaft 7 to the base end portion of the yoke 3, the restraining bolt 33 is inserted through the through holes formed at the front end portions of the pair of restraining plate portions 9a, 9b.

Further, a nut is screwed to the male screw portion 40 constituting the front end portion of the restraining bolt 33 and projected from an outer side face of the restraining plate portion 9a (or 9b). Further, by fastening the restraining bolt 33 while rotating the nut, an interval between the nut and a head portion 42 of the restraining bolt 33 is contracted and the front end portions of the pair of restraining plate portions 9a, 9b are restrained between the nut and the head portion 42.

When the nut is started to fasten in order to restrain the front end portions of the pair of restraining plate portions 9a, 9b as described above, first, the cam portion 41 restrains the shaft 7 to the inner peripheral face of the connecting portion 25 based on rotation of the restraining bolt 33. As a result, the shaft 7 and the inner peripheral face of the connecting portion 25 are brought into contact with each other at portion B of Fig.21.

Further, the restraining bolt 33 is not rotated further based on engagement between the cam portion 41 and the shaft 7. When the nut is fastened further, base end sides of the restraining faces 10a, 10b of the pair of restraining plate portions 9a, 9b proximate to the connecting portion 25 are started to restrain the pair of outer side planes 14, 14 formed at the shaft 7. Under the state, the restraining faces 10a, 10b and the outer side planes 14, 14 are brought into contact with each other at portions C, D of Fig.21.

When the nut is fastened further from the state, portions of maximizing contact face pressures between the restraining faces 10a, 10b and the outer side planes 14, 14 are shifted to portions E, F of Fig.21 constituting the opening side of the base end portion 8 of the yoke 3. Further, when the fastening torque of the restraining bolt 33 is sufficiently increased based on fastening the nut, contact pressures at the portions E, F are increased, contact pressures at the portions C, D are conversely reduced and finally, the contact pressures at the portions C, D become almost null.

According to the universal joint of the embodiment of the present invention, as described above, at a comparatively early timing since the fastening operation by the restraining bolt 33 based on fastening the nut has been started, the contact pressures between the restraining faces 10a, 10b of the respective restraining plate portions 9a, 9b and the pair of outer side planes 14, 14 formed at the shaft 7 are increased.

Therefore, the pair of outer side planes 14, 14 and the respective restraining faces 10a, 10b are brought into close contact with each other by sufficient contact pressures and the strength of coupling the shaft 7 and the yoke 3 can be ensured. Further, the portions of maximizing the contact pressures between the pair of outer side planes 14, 14 and the respective restraining faces 10a, 10b are moved or increased to the front end sides of the restraining plate portions 9a, 9b in accordance with fastening the nut and theretofore, respective constituent portions are not plastically deformed until the fastening torque for fastening the nut is considerably increased.

Therefore, in the case of the universal coupling of the embodiment of the present invention, even when the fastening torque of the nut is not strictly restricted, the strength of coupling the yoke 3 and the shaft 7 is sufficiently ensured and unpreferable plastic deformation is not brought about in the respective constituent members.

Next, Figs.24 and 25 show a shape of a total of the yoke 3 constituting the seventeenth example of the embodiment of the present invention. Constitution and operation of the universal joint integrated with the yoke 3 are as described above. Further, it is not necessarily needed that the restraining bolt used in the present invention is the cam bolt as shown in Fig.23. Further, when the cam bolt is not used, either of the restraining plate portions 9a, 9b can also be formed with a screw hole for screwing the restraining bolt or fixed with a nut.

The universal joint of the present invention is preferable for being used at a location of being applied with a large steering torque since the strength of the yoke is increased and loosening of the portion of coupling the yoke and shaft is resolved since the hot-rolled steel plate for automobile structure (for example, SAPH440 or SAPH400) having the large hardness and the large tensile strength or the like is used and the plate thickness of the metal plate constituting the yoke is increased.

Further, since the yoke is constituted by a yoke of a transverse inserting type simplifying the shape, the yoke is facilitated to work. Accordingly mass production of the yoke by pressing can be carried out, therefore the yoke can be fabricated at low cost. Particularly, when the universal joint of the present invention is used in a steering apparatus in which a large steering torque equal to or larger than 50N·m is transmitted, the effect is further achieved.

Further, by increasing the nominal diameter, the strength classification and the fastening torque of the restraining bolt, the holding force of the portion of the coupling the yoke and shaft which is a weak point of the transverse inserting type yoke is promoted and loosening between the shaft an the yoke is not brought about.

Further, the universal joint of the present invention adopts a structure in which the fastening torque of the restraining bolt is operated effectively as the force of coupling the shaft and the yoke and therefore, even when the material having the large hardness and the large tensile strength and having the large plate thickness is used, the holding force of the portion of coupling the yoke and the shaft is ensured and there is not brought about loosening of the coupling portion or emittance of strange sound.

Further, since the range of permitting the fastening torque of the restraining bolt is widened, it is not necessary to strictly control the fastening torque and operation of coupling the shaft and yoke is facilitated. Further, the universal joint of the present invention can effectively prevent the shaft and the yoke from being displaced finely over the axial direction to eliminate rattling brought about at the steering apparatus portion and prevent a driver operating the steering wheel from being given a strange feeling.

While there has been described in connection with the preferred embodiments of the present invention, it will be obvious to those skilled in the art that various changes and modification may be made therein without departing from the present invention, and it is aimed, therefore, to cover in the appended claim all such changes and modifications as fall within the true spirit and scope of the present invention.

## Claims

1. A universal joint comprising:
a shaft provided with a pair of outer side planes at a front end thereof;
a yoke being capable of connecting the pair of outer side planes of the shaft, the yoke including:
a base end portion having:
an opening portion at side of the base end portion, to which the outer side planes of the shaft is inserted;
a pair of restraining plate portions provided thereon separately from each other, the restraining plate portions having:
restraining faces which opposes to the respective outer side planes at respective inner side faces thereof; and
a through hole or a screw hole which are substantially concentric with each other; and
a connecting portion connecting the pair of restraining plate portions at a position opposite side of the opening portion; and
a restraining bolt screwing a male screw portion formed at a front end portion thereof to the screw hole or a nut in a state of being inserted through the through hole to thereby fasten the outer side planes of the shaft by the restraining faces of the restraining plate portions,
wherein the yoke is made of a material having a tensile strength equal to or larger than 310 N/mm².

2. A universal joint comprising:
a shaft provided with a pair of outer side planes at a front end thereof;
a yoke being capable of connecting the pair of outer side planes of the shaft, the yoke including:
a base end portion having:
an opening portion at side of the base end portion, to which the outer side planes of the shaft is inserted;
a pair of restraining plate portions provided thereon separately from each other, the restraining plate portions having:
restraining faces which opposes to the respective outer side planes at respective inner side faces thereof; and
a through hole or a screw hole which are substantially concentric with each other; and
a connecting portion connecting the pair of restraining plate portions at a position opposite side of the opening portion; and
a restraining bolt screwing a male screw portion formed at a front end portion thereof to the screw hole or a nut in a state of being inserted through the through hole to thereby fasten the outer side planes of the shaft by the restraining faces of the restraining plate portions,
wherein the yoke is made of a material having a nominal plate thickness equal to or larger than 6.15mm and equal to or smaller than 7.85mm .

3. The universal joint according to Claim 1, wherein the yoke is made of a material having a thickness equal to or larger than 6.15mm and equal to or smaller than 7.85mm.

4. The universal joint according to Claim 1, wherein a nominal diameter of the restraining bolt is equal to or larger than M10,
a strength classification thereof is equal to or larger than 8.8 and
a fastening torque of the restraining bolt is equal to or larger than 32.7N·m.

5. The universal joint according Claim 1, wherein a steering force assisting apparatus is attached between the yoke and a steering wheel.

6. The universal joint according to Claim 1, wherein
a center of a contact face in which the outer side plane contacts with the restraining face is shifted from a center of the shaft to an opposite side of the through hole or screw hole, to thereby enlarge a distance defined between an edge of the contact face on a side of the through hole or the screw hole and the through hole or the screw hole.

7. The universal joint according to Claim 1, wherein a concavoconvex portion is formed in an axial direction on at least one of a slide face of the shaft and a slide face of the yoke, both of which shift each other in the axial direction when a force sliding the shaft and the yoke in an axial direction thereof is applied thereto, to thereby engaging the shaft and the yoke in order to prevent from being displaced in the axial direction.

8. The universal joint according to Claim 1, wherein a thin film made of a material having a large friction coefficient is interposed between contact faces of the shaft and the yoke, on which the shaft and the yoke contact with each other.

9. The universal joint according to Claim 1, wherein
the pairs of restraining plate portions are not parallel with the outer side planes in a state before fastening the restraining bolt in accordance with a degree of strongly undergoing an influence of a fastening force of the restraining bolt, to thereby increase shaft holding force between the respective restraining faces and the outer side planes in accordance with fastening the restraining bolt.

10. The universal joint according to Claim 1, wherein the a second through hole or a thin-walled portion is formed at a part of the yoke, to thereby decrease rigidity of the yoke functioning between the pair of the restraining plate portions against a force generated based on fastening of the restraining bolt in order to enhance an efficiency of fastening the pair of outer side planes and the respective restraining faces in fastening the restraining bolt.

11. The universal joint according to Claim 1, wherein an interval between the restraining faces of the pair of restraining plate portions before fastening the restraining bolt is formed to be narrow on a side of being proximate to the connecting portion and to be wide on the opening side of the base end portion formed with the through hole or the screw hole, respectively, to thereby make the pair of the outer side plane and the respective restraining face begin to contact each other at proximate to the connecting portion and also make a position in which a maximum contacting pressure applies shift to the opening of the end base portion or the maximum contacting pressure increase with a progress of an operation of fastening the restraining bolt.

12. The universal joint according to Claim 2, wherein the yoke is made of a material having a tensile strength equal to or larger than 310 N/mm².

13. The universal joint according to Claim 2, wherein a nominal diameter of the restraining bolt is equal to or larger than M10,
a strength classification thereof is equal to or larger than 8.8 and
a fastening torque of the restraining bolt is equal to or larger than 32.7N·m.

14. The universal joint according Claim 2, wherein a steering force assisting apparatus is attached between the yoke and a steering wheel.

15. The universal joint according to Claim 2, wherein a center of a contact face in which the outer side plane contacts with the restraining face is shifted from a center of the shaft to an opposite side of the through hole or screw hole, to thereby enlarge a distance defined between an edge of the contact face on a side of the through hole or the screw hole and the through hole or the screw hole.

16. The universal joint according to Claim 2, wherein a concavoconvex portion is formed in an axial direction on at least one of a slide face of the shaft and a slide face of the yoke, both of which shift each other in the axial direction when a force sliding the shaft and the yoke in an axial direction thereof is applied thereto, to thereby engaging the shaft and the yoke in order to prevent from being displaced in the axial direction.

17. The universal joint according to Claim 2, wherein a thin film made of a material having a large friction coefficient is interposed between contact faces of the shaft and the yoke, on which the shaft and the yoke contact with each other.

18. The universal joint according to Claim 2, wherein the pairs of restraining plate portions are not parallel with the outer side planes in a state before fastening the restraining bolt in accordance with a degree of strongly undergoing an influence of a fastening force of the restraining bolt, to thereby increase shaft holding force between the respective restraining faces and the outer side planes in accordance with fastening the restraining bolt.

19. The universal joint according to Claim 2, wherein the a second through hole or a thin-walled portion is formed at a part of the yoke, to thereby decrease rigidity of the yoke functioning between the pair of the restraining plate portions against a force generated based on fastening of the restraining bolt in order to enhance an efficiency of fastening the pair of outer side planes and the respective restraining faces in fastening the restraining bolt.

20. The universal joint according to Claim 2, wherein an interval between the restraining faces of the pair of restraining plate portions before fastening the restraining bolt is formed to be narrow on a side of being proximate to the connecting portion and to be wide on the opening side of the base end portion formed with the through hole or the screw hole, respectively, to thereby make the pair of the outer side plane and the respective restraining face begin to contact each other at proximate to the connecting portion and also make a position in which a maximum contacting pressure applies shift to the opening of the end base portion or the maximum contacting pressure increase with a progress of an operation of fastening the restraining bolt.
